# FASCICULE DE BREVET EUROPEEN

(11) **EP 1 432 250 B1**
(45) Date de publication et mention de la délivrance du brevet: **20.12.2006**
(21) Numéro de dépôt: 03292256.9
(22) Date de dépôt: 12.09.2003
(51) Int. Cl.: H04N 7/62, H04N 7/52, H04N 7/24

(54) **Procédé et dispositif de synchronisation de la présentation de Trames audio et/ou de Trames video**
Verfahren und Vorrichtung zur Synchronisation der Wiedergabe von Audio- und/oder Video-Frames
Method and apparatus for synchronising the presentation of audio and/or video frames

(30) Priorité: 20.12.2002 FR 0216329
(43) Date de publication de la demande: 23.06.2004
(73) Titulaire: STMicroelectronics S.A., 92120 Montrouge (FR)
(72) Inventeur: Roelens, Fréderic, 75014 Paris (FR)
(74) Mandataire: Loisel, Bertrand

(56) Documents cités:
- US-A1- 2002 140 858

## Description

La présente invention concerne un procédé et un dispositif de synchronisation de la présentation de trames vidéo et/ou de trames audio générées à partir d'un flux de données comportant des estampilles temporelles indiquant des instants de présentation des trames. Elle s'applique plus particulièrement à un flux de données compressées lu sur un support numérique d'enregistrement de masse. Le flux de données compressées peut être un flux de données compressées selon la norme MPEG-2 (ISO/IEC 13812-2), ci-après norme MPEG.

Les trames sont produites par un décodeur MPEG à partir d'un flux de données MPEG diffusé en direct par une source d'émission (diffusion par satellite, diffusion par câble ou diffusion numérique terrestre ou DVB ("Digital Video Broadcasting"). Elles appartiennent à un programme audiovisuel ou à plusieurs programmes audiovisuels multiplexés dans le flux de données.

Les trames sont synchronisées juste avant leur présentation, par rapport à une horloge générée à partir des références temporelles transmises par la source d'émission dans le flux de données. Ces références temporelles sont appelées "Program Clock Reference" ou PCR, dans la norme MPEG. Elles sont insérées dans le flux de données MPEG en synchronisme avec une horloge qui cadence le codage MPEG des trames. Elles permettent à l'aide d'un circuit PLL ("Phase Locked Loop") ou similaire, de générer coté décodage une horloge de référence liée au programme. Cette horloge est appelée horloge de programme dans la suite.

Le flux de données comporte également des estampilles temporelles de présentation indiquant des instants de présentation respectifs des trames. Ces estampilles temporelles permettent de synchroniser la présentation des trames par rapport à l'horloge de programme. Elles sont appelées "Presentation Time Stamps", ou PTS, dans la norme MPEG. Le décodage et l'affichage des trames sont alors effectués en respectant des contraintes de temps réel de manière que les trames soient présentées à des instants définis par les PTS en relation avec l'horloge de programme. Bien que le décodage vidéo et le décodage audio soient des processus séparés, chaque trame vidéo et chaque trame audio est synchronisée avec l'horloge de programme en sorte qu'elles sont présentées à un même instant déterminé. Dit autrement, les trames vidéo et les trames audio sont chacune synchronisées avec l'horloge de programme et sont aussi synchronisées entre elles.

Lorsque le flux de données à partir duquel les trames sont produites n'est pas reçu en temps réel, mais est lu sur un support numérique d'enregistrement de masse tel qu'un disque dur ou un DVD (« Digital Video Disk »), la notion de temps réel est perdue. En effet, même si le flux de données stocké sur le support sous la forme d'un flux élémentaire ("Elementary Stream" ou ES) ou d'un flux élémentaire en paquets ("Packetized Elementary Stream" ou PES) comprend toujours les PCR et les PTS, le processus de décodage est réalisé de manière très différente. En effet, il est prévu un tamponnage (mise en mémoire tampon, ou "buffering" en anglais) beaucoup plus important que dans le cas du décodage en temps réel. De même, il y a une grande différence en ce qui concerne la fourniture des données. En effet, le taux de fourniture des données peut être beaucoup plus élevé et être en mode rafale ("burst mode" en anglais). Ceci résulte de la façon spécifique dont sont réalisés les accès au disque dur pour la lecture de portions du flux de données.

De plus, la synchronisation doit être conservée lors de la lecture selon des modes de lecture évolués ("trick modes") tel que l'avance rapide ("Fast Forward") et la lecture en marche arrière ("Rewind") de même que lorsque des accès aléatoires sur le disque dur sont requis. Egalement, la synchronisation doit être conservée lorsqu'on passe de la présentation d'un programme reçu en temps réel à celle d'un programme lu sur disque dur, ou réciproquement, ou de la présentation d'un premier programme à un second programme lu sur un disque dur, ou encore lors de l'insertion d'une séquence publicitaire ou autre dans la présentation d'un programme ("Seamless Splicing").

Un premier aspect de l'invention concerne la synchronisation de la présentation de trames vidéo ou de trames audio, indépendamment l'une de l'autre. Pour la synchronisation de la vidéo, l'invention consiste à analyser une suite d'estampilles temporelles de présentation présentes dans le flux de données et à prendre la décision de sauter ou de répéter la présentation de trames (i.e. l'affichage d'images) selon le retard ou l'avance, respectivement, par rapport à une horloge de référence générée localement. Pour la synchronisation audio, l'invention consiste en un processus similaire, sauf que l'avance est traitée par l'arrêt de la présentation de trames audio au lieu de leur répétition.

Un second aspect de l'invention concerne la synchronisation des trames vidéo et des trames audio entre elles. On parle alors de synchronisation mutuelle.

L'invention propose ainsi un procédé de synchronisation de la présentation de trames vidéo ou de trames audio générées en traitant un flux de données comportant des estampilles temporelles de présentation (PTS) indiquant des instants de présentation desdites trames, le traitement de certaines au moins des estampilles temporelles de présentation comprenant les étapes suivant lesquelles :
- on calcule une valeur d'écart courante entre l'instant de présentation indiqué par une estampille temporelle en cours de traitement et une heure indiquée par une horloge de référence locale lors du traitement de ladite estampille temporelle ;
- on mémorise ladite valeur d'écart courante dans un registre à la suite de valeurs d'écart correspondant à des estampilles temporelles traitées antérieurement ;
- on calcule une variance d'un ensemble ordonné de valeurs d'écart stockées dans le registre venant après une valeur d'écart de référence, ledit ensemble de valeurs d'écart comprenant au moins la valeur d'écart courante, et on compare ladite variance à un seuil de variance déterminé,
   - si la variance est supérieure au seuil de variance, on sélectionne la valeur d'écart courante en tant que nouvelle valeur d'écart de référence, ou
   - si la variance est inférieure au seuil de variance, on calcule une moyenne des valeurs d'écart dudit ensemble de valeurs d'écart et on compare ladite moyenne à un seuil de moyenne déterminé,
      - si la valeur absolue de la moyenne est supérieure au seuil de moyenne, on initialise l'horloge de référence à une valeur instantanée correspondant à l'instant de présentation indiqué par l'estampille temporelle en cours de traitement et on sélectionne la valeur d'écart courante en tant que nouvelle valeur d'écart de référence, ou
      - si la valeur absolue de la moyenne est inférieure au seuil de moyenne, on ajuste la présentation des trames de façon à réduire l'écart entre l'instant de présentation indiqué par ladite estampille temporelle en cours de traitement et ladite heure indiquée par l'horloge de référence locale lors du traitement de ladite estampille temporelle.

Le procédé de l'invention prévoit donc la synchronisation des trames par rapport à une horloge de référence, i.e. l'horloge de référence locale, qui n'est pas forcément liée aux PCR contenues dans le flux. Il peut alors notamment être utilisé pour la présentation de trames vidéo et/ou de trames audio générées par un décodeur vidéo/audio à partir d'un flux de données lu sur un support d'enregistrement, notamment un ES ou un PES au sens de la norme MPEG.

Un autre avantage du procédé de l'invention réside dans le fait qu'il permet une synchronisation rapide des trames et donc avec un faible délai d'attente lorsqu'on passe d'un flux à un autre flux (par exemple lorsqu'on passe d'un flux reçu en temps réel à un flux lu sur disque dur ou réciproquement, ou lorsqu'on passe d'un flux reçu en direct à un autre flux reçu en direct) ou lorsqu'on effectue des sauts en avant ou en arrière dans le flux. Les séquences de trames sont par conséquent peu altérées par le procédé de synchronisation.

Les trames successivement présentées peuvent ainsi appartenir à des flux de données distincts ou à des portions distinctes d'un même flux de données. En particulier, les trames successivement présentées peuvent être générées à partir :
- de flux de données diffusés en temps réel, dans un ou plusieurs flux de transport au sens de la norme MPEG ;
- de flux de données lus sur un support numérique d'enregistrement de masse et correspondant à des programmes respectifs distincts ;
- de portions disjointes d'un flux de données correspondant à un seul et même programme qui est lu sur un support numérique d'enregistrement de masse, et destinées à être présentées à des vitesses de présentation éventuellement différentes et dans un sens (en avant ou en arrière) éventuellement différent;
- d'un flux reçu en temps réel puis d'un autre flux lu sur un support numérique d'enregistrement de masse, ou vice-versa.

Lorsque des séquences de trames successives sont destinées à être présentées à des vitesses de présentation respectives différentes (pour des trames produites à partir d'un flux de données lu sur un support numérique d'enregistrement de masse), l'horloge de référence locale présente des cadencements respectifs différents pour chacune de ces séquences de trames.

Le procédé s'applique aussi bien à un flux de données reçu en temps réel qu'à un flux de données lu sur un support numérique d'enregistrement de masse. Lorsque les trames présentées sont produites à partir d'un flux de données reçu en temps réel, les instants horodatés définis par l'horloge de référence locale peuvent avantageusement être obtenus directement à partir des PCR transmis par la source d'émission à l'intérieur du flux de données.

Le procédé de l'invention peut être mis en oeuvre en réponse à une commande de début de présentation.

Selon un mode de mise en oeuvre, une valeur d'écart entre un instant de présentation indiqué par une estampille temporelle de présentation et l'heure correspondante indiquée par l'horloge de référence locale n'est mémorisé dans le registre que si cette valeur d'écart est non nulle. Le registre ne contient alors que des valeurs d'écart correspondant à des défauts de synchronisation du flux de trames présentées. Lorsque la valeur d'écart est nulle, on sélectionne la valeur d'écart précédemment mémorisée dans le registre en tant que nouvelle valeur d'écart de référence.

De préférence, lorsqu'on sélectionne une nouvelle valeur d'écart de référence, on efface toutes les valeurs d'écart contenues dans le registre. Dans ce cas, l'ensemble des valeurs d'écart pris en compte pour le calcul de variance ou pour le calcul de moyenne correspond à toutes les valeurs d'écart contenues dans le registre au moment du calcul. Un registre de capacité réduite est alors suffisant.

En outre, après la mémorisation dans le registre de la valeur d'écart correspondant à l'estampille temporelle en cours de traitement, le traitement de cette estampille temporelle peut être interrompu si le registre contient un nombre de valeurs d'écart inférieur à un nombre déterminé. L'introduction d'un tel seuil permet de prendre en compte une durée minimale de confirmation d'un défaut de synchronisation des trames avant de modifier le cadencement de l'horloge de référence locale. Cette disposition réduit encore les artefacts visibles ou audibles par un utilisateur en évitant les resynchronisation intempestives.
Un deuxième aspect de l'invention concerne un procédé de synchronisation de la présentation de trames vidéo et de la présentation de trames audio pour la présentation en parallèle des trames vidéo et des trames audio, comprenant les étapes suivant lesquelles :
- on synchronise la présentation des trames vidéo selon un procédé selon le premier aspect ;
- parallèlement, on synchronise la présentation des trames audio selon un procédé selon le premier aspect ;
- on synchronise mutuellement une horloge de référence locale associée à la présentation des trames vidéo et une horloge de référence locale associée à la présentation des trames audio, en verrouillant une première de ces horloges de référence locale à l'autre.

On entend par "parallèlement" une synchronisation de la présentation des trames vidéo et une synchronisation de la présentation des trames audio réalisées simultanément par des voies distinctes. En particulier, certains au moins des moyens utilisés pour synchroniser la présentation des trames vidéo sont distincts de ceux utilisés pour synchroniser la présentation des trames audio.

Ainsi les présentations des trames vidéo et audio sont initialement synchronisées indépendamment l'une de l'autre, puis sont ensuite synchronisées entre elles. Un tel procédé permet de prendre en compte des contraintes et/ou des exigences propres à chaque type de trames, tout en garantissant un début de présentation des trames de chaque type dont le débit est régulé dès le lancement de la présentation.

Un troisième aspect de l'invention concerne un dispositif pour la mise en oeuvre d'un procédé selon le premier ou le deuxième aspect.

Un quatrième aspect de l'invention concerne un circuit pilote vidéo ("Video Driver" en anglais) comprenant un dispositif selon le troisième aspect.

Un cinquième aspect concerne un boîtier décodeur ("Set-Top Box" en anglais) comprenant un circuit selon le quatrième aspect.

D'autres particularités et avantages de la présente invention apparaîtront dans la description ci-après d'exemples de mise en oeuvre non limitatifs, en référence aux dessins annexés, dans lesquels :
- la figure 1 est un diagramme d'un dispositif pour la mise en oeuvre du procédé selon le premier aspect de l'invention ;
- la figure 2 est un organigramme des étapes d'un procédé selon l'invention ;
- la figure 3 est un diagramme d'un dispositif pour la mise en oeuvre du procédé selon le deuxième aspect de l'invention.

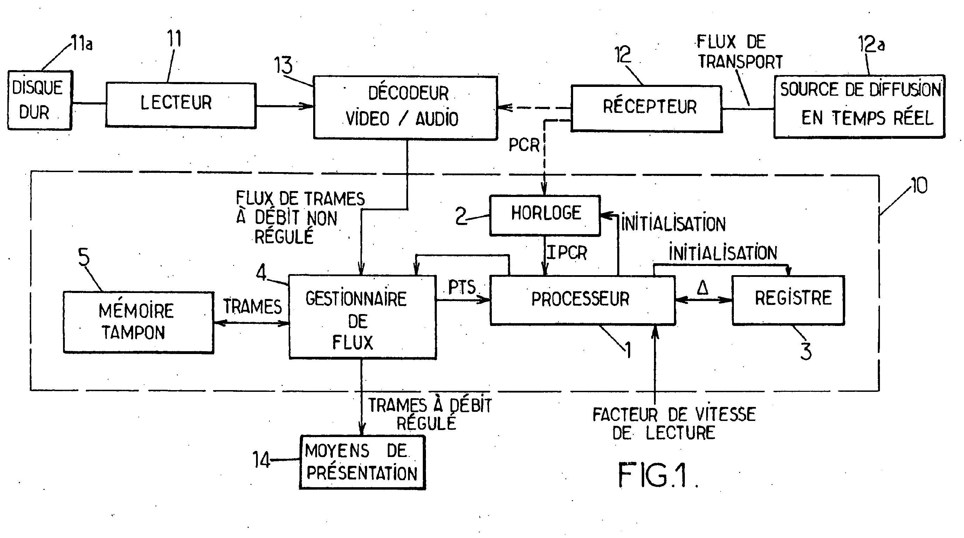

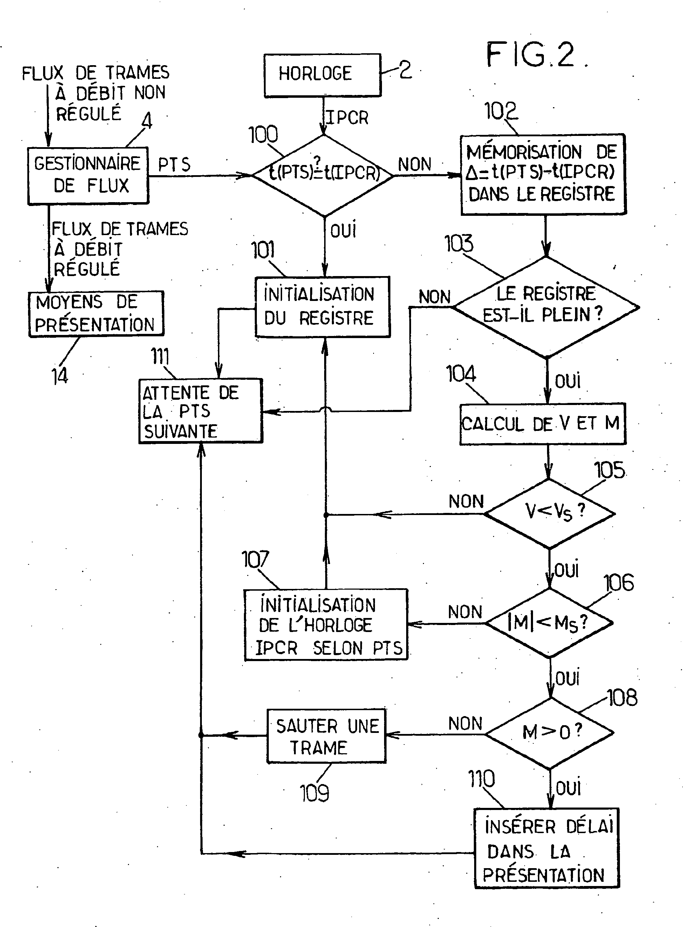

Aux figures 1 et 2, les trames fournies à des moyens de présentation sont des trames vidéo (une telle trame correspondant à une image à afficher) ou des trames audio (une telle trame correspondant au son associé à une image).

A la figure 1, la référence 10 désigne un dispositif régulateur de trames adapté pour mettre en oeuvre le procédé de synchronisation selon le premier aspect de l'invention. Le régulateur 10 comprend notamment un processeur 1, une horloge de référence locale 2 et un gestionnaire du débit de trames 4.

L'horloge 2 est mise en oeuvre sous la forme d'un compteur, le cadencement de l'horloge (c'est-à-dire le rythme de comptage du compteur) étant par exemple égale à 90 kHz (kilo-hertz) pour une vitesse de lecture nominale (x1). Le cadencement peut-être augmenté ou réduit pour la lecture en mode accéléré ou ralenti, en appliquant un facteur de vitesse de lecture à la commande du compteur.

Le gestionnaire 4 reçoit en entrée un flux de trames à débit non régulé transmis par un décodeur vidéo/audio 13. En sortie, le gestionnaire 4 transmet le flux de trames à débit régulé à des moyens de présentation 14. Les moyens de présentation comprennent un écran d'affichage (pour la vidéo) ou un ou plusieurs haut-parleurs (pour l'audio), et sont munis d'une entrée à laquelle sont fournies les trames de manière continue ou quasi-continue. Le décodeur 13 produit un flux de trames à débit non régulé à partir de données fournies par un lecteur 11 ayant pour fonction de lire des données sur un support numérique d'enregistrement de masse 11a ou, éventuellement, par un récepteur 12. Le récepteur 12 reçoit d'une source de diffusion en temps réel 12a, un flux de transport diffusé par satellite, par câble, ou par diffusion numérique terrestre. Ce flux de transport comporte sous forme multiplexée les données vidéo, audio ou autres d'un ou plusieurs programmes. Le récepteur 12 assure le démultiplexage de ce flux de transport. En outre, il peut éventuellement exécuter d'autres fonctions telles que, par exemple, un désembrouillage, un contrôle d'accès, etc. Le décodeur 13 peut successivement décoder des flux de données reçus du lecteur 11 et du récepteur 12, ou réciproquement.

Le gestionnaire 4 est en outre relié à une mémoire tampon 5 destinée à mémoriser temporairement certaines trames avant de les délivrer pour être présentées. Ce tamponnage ("buffering" en anglais) des trames rend le débit des trames délivrées aux moyens de présentation 14 indépendant du débit des trames reçues du décodeur 13.

Le processeur 1 peut accéder à des données numériques mémorisées dans un registre de mémoire 3. Une capacité de mémorisation limitée du registre 3, correspondant par exemple à un maximum de 16 ou 32 valeurs numériques mémorisées simultanément, peut être suffisante pour la mise en oeuvre du procédé de l'invention. Un tel registre de capacité limitée est compatible avec une vitesse de fonctionnement élevée. Le registre 3 est contrôlé par le processeur 1 pour mémoriser selon un ordre chronologique des valeurs d'écart temporel calculées par le processeur 1. Le processeur 1 peut en outre commander une réinitialisation instantanée de toutes les données numériques contenues dans le registre 3. On entend par réinitialisation du registre 3 une opération par laquelle le processeur 1 efface toutes les valeurs d'écart contenues dans le registre 3.

Le processeur 1 peut ainsi recevoir un facteur de vitesse de lecture, de l'extérieur du dispositif 10, pour prendre en compte une commande de lecture à vitesse accélérée ou réduite par rapport à la vitesse nominale.

L'horloge 2 possède un cadencement de référence et fournit à intervalles réguliers des références temporelles au processeur 1. L'horloge 2 est appelée horloge de référence locale en ce sens qu'elle peut fonctionner sans référence temporelle extérieure. Les références temporelles qu'elle fournit, ci-après appelées IPCR ("Internal Program Clock Reference"), identifient l'heure par rapport à un instant d'initialisation de l'horloge 2. Une telle initialisation de l'horloge 2 est commandée par le processeur 1 lors de la fourniture d'une trame aux moyens de présentation 14.

Le récepteur 12 reçoit des références temporelles transmises par la source 12a, qui sont les PCR présentés en introduction. Lorsque le décodeur 13 traite un flux de données reçu du récepteur 12, les IPCR sont de préférence basés sur les PCR transmis par la source 12a. Dans un exemple, le PCR constituent directement les IPCR. L'horloge 2 ne fait alors que se synchroniser sur les PCR reçus, de manière connue en soi, par exemple au moyen d'une PLL ("Phase Locked Loop").

Le flux de données reçu par le décodeur comprend par ailleurs des estampilles temporelles de présentation, qui sont les PTS présentées en introduction. Ces PTS se retrouvent dans le flux de trames à débit non régulé qui est transmis au gestionnaire 4. Lorsque le gestionnaire 4 détecte une PTS dans le flux de trames qu'il reçoit, il l'indique au processeur 1. En retour, le processeur 1 peut transmettre au gestionnaire 4 des commandes de régulation du flux de trames.

La figure 2 est un organigramme illustrant les étapes d'un procédé de régulation d'un flux de trames vidéo ou audio qui peut être mis en oeuvre par le dispositif de la figure 1.

Lorsque le gestionnaire 4 détecte une PTS, il transmet au processeur 1 l'instant de présentation t(PTS) indiqué par cette PTS. Dans une étape 100 indiquée sur la figure 2, le processeur 1 compare cet instant t(PTS) à l'heure identifiée par le dernier IPCR reçu de l'horloge 2, désignée t(IPCR) dans la suite et à la figure. Si l'instant t(PTS) est égal à l'heure t(IPCR), cela signifie que la transmission des trames aux moyens de présentation 14 est synchronisée avec l'horloge 2. Le registre 3 est alors réinitialisé (étape 101) et le processeur 1 attend que le gestionnaire 4 détecte une PTS suivante dans le flux de signaux (étape 111). Le procédé est alors réitéré pour le traitement de ladite PTS suivante.

Si l'instant t(PTS) est différent de l'heure t(IPCR), cela signifie que la transmission des trames aux moyens 14 n'est pas synchronisée avec l'horloge 2. Le processeur 1 calcule alors la valeur Δ de l'écart entre l'instant t(PTS) et l'heure t(IPCR). Dans un exemple, Δ est égal à la valeur de t(PTS) de laquelle est retranchée la valeur de t(IPCR). Si Δ est positif, cela signifie que la présentation de la trame est en avance par rapport au cadencement de l'horloge 2. Inversement, si Δ est négatif, cela signifie que la présentation de la trame est en retard par rapport à ce cadencement. La valeur Δ est mémorisée dans le registre 3 (étape 102).

Le processeur 1 examine alors si le registre 3 contient un nombre déterminé de valeurs d'écarts mémorisées (étape 103), par exemple 16 valeurs. Si ce nombre de valeurs d'écarts n'est pas atteint, le processeur 1 attend que le gestionnaire 4 détecte une PTS suivante dans le flux de trames (étape 111).

Lorsque le registre 3 contient ledit nombre déterminé de valeurs d'écart, le processeur 1 calcule une variance V et une moyenne M à partir de l'ensemble des valeurs d'écart contenues dans le registre 3 (étape 104). La variance V peut être de l'un des types connus dans le domaine des statistiques, telle que la somme des carrés des différences entre chaque valeur d'écart mémorisée dans le registre 3 d'une part et une moyenne desdites valeurs d'écart d'autre part, ou telle que la plus grande de ces différences considérées en valeurs absolues. La moyenne M peut par exemple être calculée comme la somme des valeurs d'écart mémorisées dans le registre 3, divisée par le nombre de ces valeurs d'écart.

Le processeur 1 compare alors la variance calculée V à un seuil de variance prédéfini V_{S} (étape 105). Le seuil V_{S} peut dépendre du type des trames (vidéo ou audio).

Si la variance V est supérieure à V_{S} cela indique une variation brutale et importante du débit des trames reçues du décodeur 13 par le gestionnaire de flux 4. Dans un mode de mise en oeuvre avantageux (non représenté à la figure), le processeur 1 attend qu'une telle variation soit confirmée sur plusieurs PTS. Dans cette attente, le processeur 1 ne commande aucun changement dans la présentation des trames. Il commande une réinitialisation du registre 3 (étape 101) et attend que le gestionnaire 4 détecte une PTS suivante dans le flux de données (étape 111). Le caractère brutal et important de la variation précitée est alors confirmé si on obtient pour les balises PTS suivantes une nouvelle valeur de la variance V qui soit faible.

A l'inverse, si la variance V est inférieure à V_{S}, cela signifie que le débit du flux de trames reçu du décodeur 13 est stable. Le processeur 1 compare alors la moyenne M à un seuil de moyenne M_{S} (étape 106). Le seuil M_{S} peut aussi dépendre du type des trames.

Si la valeur de la moyenne M est supérieure, en valeur absolue, au seuil M_{S}, cela signifie qu'il existe un décalage systématique, sur plusieurs PTS, de la transmission des trames aux moyens 14 par rapport au cadencement de l'horloge 2. Un tel décalage est alors corrigé par le processeur 1 en commandant une réinitialisation de l'horloge 2 avec l'instant t(PTS) (étape 107). Le registre 3 est alors réinitialisé (étape 101) et la PTS suivante est attendue (étape 111).

A l'inverse, si la valeur absolue de la moyenne M est non nulle mais inférieure au seuil Ms, cela signifie qu'il existe un faible décalage instantané des trames reçues du décodeur 13 par rapport au cadencement de l'horloge 2. Dans ce cas, le décalage est compensé par le processeur 1 en commandant un ajustement de la délivrance des trames aux moyens 14. Le processeur 1 envoie alors une commande au gestionnaire 4 pour qu'il modifie le flux de trames de manière à réguler son débit. On entend par régulation du débit du flux de trames le fait de faire en sorte que la présentation survient sensiblement en synchronisme avec l'heure t(IPCR) de l'horloge 2. La régulation du flux de signaux transmis à l'écran 14 est obtenue de la façon suivante, en testant le signe positif ou négatif de la moyenne M (étape 108) :
- lorsque la moyenne M est négative, ce qui signifie un retard de trames par rapport au cadencement de l'horloge 2, le processeur 1 commande au gestionnaire 4 de sauter au moins une trame (étape 109). Le flux de trames transmis aux moyens 14 est ensuite poursuivi en étant synchronisé avec l'horloge 2 ;
- à l'inverse, lorsque la moyenne M est positive, ce qui signifie une avance des trames par rapport au cadencement de l'horloge 2, le processeur 1 commande au gestionnaire 4 d'introduire un délai dans la délivrance des trames aux moyens 14 (étape 110). Concernant la vidéo, ce délai peut être obtenu en commandant au gestionnaire 4 de répéter une ou plusieurs trames vidéo, une ou plusieurs fois. Concernant l'audio, le processeur 1 peut commander au gestionnaire 4 d'attendre pendant une durée déterminée entre la délivrance de deux trames audio, de façon à compenser l'avance du flux de trames. Le flux de trames transmis aux moyens 14 est ensuite poursuivi, en étant synchronisé avec l'horloge 2.

Le procédé de synchronisation décrit ci-dessus met en oeuvre une gestion particulière du contenu du registre 3, procédant par initialisations répétées du registre 3. Une telle gestion permet d'utiliser un registre 3 de capacité limitée. Elle est donnée ici à titre d'exemple, étant entendu que d'autres modes de gestion équivalents peuvent être alternativement utilisés.

Le procédé de synchronisation de l'invention permet de présenter des trames automatiquement et sans discontinuité même lorsque ces trames appartiennent à des programmes différents (ayant des horloges de programme respectives différentes), ou à des portions discontinues du flux de données reçu par le décodeur 13 (en cas de lecture en mode évolué à partir du support 13a). Il permet aussi l'insertion en douceur d'une publicité au cours de la présentation d'un programme ("Seamless Splicing"). A titre d'exemple, une séquence de publicité peut ainsi être insérée pendant la présentation d'un film, en interrompant la présentation du film pour la durée de la séquence de publicité, puis en reprenant la présentation du film, sans délai à la suite de la séquence de publicité.

Le procédé de synchronisation de l'invention peut aussi être mis en oeuvre au début de la présentation de trames. Dans ce cas, une étape intermédiaire peut être comprise entre la réception d'une commande de début de présentation et le traitement précédemment décrit des PTS d'une première séquence de trames. Cette étape intermédiaire peut notamment comprendre une initialisation de l'horloge 2 à une valeur instantanée correspondant à l'instant t(PTS) indiqué par la première PTS détectée par le gestionnaire de flux 4. Ceci permet une synchronisation immédiate dès la première PTS de la séquence.

L'étape intermédiaire peut aussi comprendre un enregistrement dans la mémoire tampon 5 de premières trames destinées à être présentées. Ces trames disponibles dans la mémoire tampon 5 peuvent correspondre à une avance du flux de trames délivré par le décodeur 13, par rapport à la présentation réelle des trames sur les moyens 14. Une telle avance peut permettre de compenser un ralentissement ultérieur du flux de trames délivré par le décodeur 13.

Le procédé de l'invention peut encore être utilisé pour synchroniser entre elles les présentations respectives de deux flux de trames distincts. Les deux flux de trames sont par exemple un flux de trames vidéo et un flux de trames audio d'un seul et même programme.

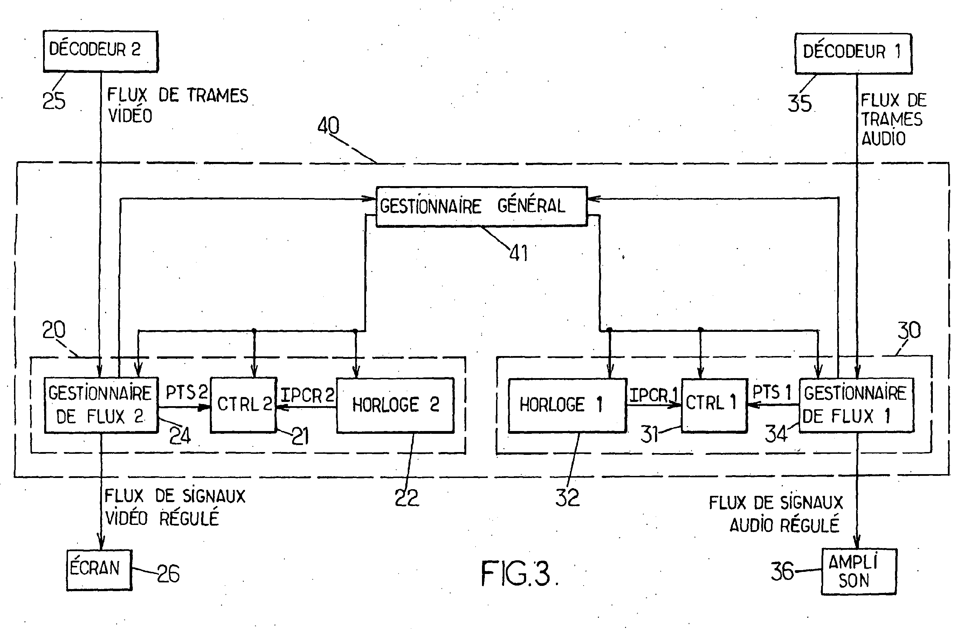

La figure 3 représente schématiquement un dispositif 40 recevant à la fois un flux de trames vidéo et un flux de trames audio, par exemple produits respectivement par un décodeur vidéo 25 (décodeur 2) et par un décodeur audio 35 (décodeur 1). Typiquement, les décodeurs 25 et 35 sont compris dans un même circuit correspondant au décodeur vidéo/audio 13 de la figure 1.

En général, le décodage audio est plus rapide que le décodage vidéo, ce qui nécessite que les trames vidéo transmises à un système d'affichage 26 soient synchronisées avec les trames audio envoyées à un amplificateur 36 alimentant un ensemble de haut-parleurs (non représentés). Cette synchronisation est effectuée au moment de la présentation des trames vidéo et des trames audio respectivement au système d'affichage 26 et à l'amplificateur 36.

Pour cela, un dispositif régulateur de flux général 40 comprend un premier dispositif régulateur de flux secondaire 20 opérant sur le flux de trames vidéo issu du décodeur vidéo 25, et un second dispositif régulateur de flux secondaire 30 opérant sur le flux de trames audio issu du décodeur audio 35. Les régulateurs secondaires 20 et 30 sont indépendants l'un de l'autre et délivrent respectivement un flux de trames vidéo à débit régulé au système d'affichage 26 et un flux de trames audio à débit régulé à l'amplificateur 36.

Les régulateurs secondaires 20 et 30 possèdent chacun une structure identique à celle du régulateur 10 présenté ci-dessus en regard du schéma de la figure 1. En particulier, ils comprennent chacun un processeur respectivement 21 et 31 (respectivement CTRL2 et CTRL1 sur la figure 3), une horloge respectivement 22 et 32 (respectivement horloges 2 et 1) et un gestionnaire de flux respectivement 24 et 34 (respectivement gestionnaires de flux 2 et 1). Par souci de simplicité, seuls ces éléments sont représentés à la figure 3.

Le régulateur général 40 comprend en outre un gestionnaire général 41 qui peut envoyer des commandes aux différents éléments des régulateurs secondaires 20 et 30. Les cadencements des deux horloges 22 et 32 sont identiques, par exemple égal à 90 kHz (multiplié par le facteur de vitesse de lecture respectivement vidéo et audio).

Le gestionnaire 24 détecte des PTS dans le flux de trames vidéo (notées ici PTS2), et indique les instants correspondant à ces PTS (instants t(PTS2)) au processeur 21. L'horloge 22 indique un instant correspondant à la détection de chaque PTS et indique cet instant, désigné par t(IPCR2), au processeur 21.

De même, le gestionnaire du flux audio 34 détecte des PTS (notées PTS1 à la figure) dans le flux de trames audio, et indique au processeur 31 les instants t(PTS1) correspondant à ces PTS. L'horloge 32 indique au processeur 31 les instants t(IPCR1) correspondant à la détection de chaque PTS. Les instants t(PTS1) sont indépendants a priori des instants t(IPCR2).

De préférence, le régulateur 40 entretien une troisième horloge (non représentée) qui est l'horloge de programme générée ou plutôt récupérée à partir des PTS.

A la suite d'une commande de début de présentation reçue par le gestionnaire général 41, la présentation des trames des deux flux vidéo et audio est démarrée.

La présentation du flux de trames audio est initiée de la façon décrite en relation avec les figures 1 et 2, en utilisant les instants t(PTS1) et t(IPCR1) correspondants. Simultanément, et indépendamment, la présentation du flux de trames vidéo est initiée en utilisant les instants t(PTS2) et t(IPCR2) correspondantes.

Eventuellement, l'horloge 32 (respectivement 22) peut être initialisée à l'instant t(PTS1) (respectivement t(PTS2)) de la première PTS détectée par le gestionnaire de flux 34 (respectivement 24). Le gestionnaire de flux 34 (respectivement 24) délivre alors à l'amplificateur 36 (respectivement à l'écran 26) un flux de trames audio (respectivement vidéo) à débit régulé et synchronisé avec l'horloge 32.

Entre la réception de la commande de début de présentation par le gestionnaire général 41 et le début de la fourniture des trames audio (respectivement vidéo) à l'amplificateur 36 (respectivement au dispositif d'affichage 26), les premières trames audio (respectivement vidéo) du programme sont mémorisées dans une mémoire tampon par le gestionnaire de flux 34 (respectivement 24). Une telle mémoire tampon correspond à la mémoire tampon 5 de la figure 1. Lorsque cette mémoire tampon est pleine, le gestionnaire de flux 34 (respectivement 24) débute la transmission des trames audio (respectivement vidéo) à l'amplificateur 36 (respectivement au dispositif d'affichage 26) sous forme d'un flux à débit régulé, synchronisé avec l'horloge 32 (respectivement 22).

Les flux de trames vidéo et audio présentés ont alors chacun un débit régulé, mais ne sont pas nécessairement synchronisés l'un par rapport à l'autre. Par exemple, les trames audio peuvent être en avance par rapport aux trames vidéo. Les deux horloges 22 et 32 ont chacune été initialisées au moins une fois à des valeurs instantanées correspondant à des instants t(PTS2) ou t(PTS1) respectivement, et ce de façon indépendante l'une de l'autre.

Pour obtenir cette synchronisation mutuelle (c'est-à-dire entre eux) du flux de trames vidéo et du flux de trames audio, le gestionnaire général 41 commande un verrouillage de l'horloge 32 à l'heure instantanée indiquée par l'horloge 22. Ce verrouillage peut avantageusement être effectué par une initialisation l'horloge 32 à l'heure indiquée par l'horloge 22 à chaque fois qu'une initialisation de l'horloge 22 est commandée en application du procédé décrit ci-dessus en regard du schéma de la figure 2.

Même avant l'initialisation de l'horloge 32 à l'heure indiquée par l'horloge 22, les deux horloges 22 et 32 indiquent en principe des heures respectives proches l'une de l'autre sur la base d'informations (à savoir les PTS respectivement PTS2 et PTS1) provenant du même flux de données (donc liées à la même horloge de programme) puisque chacun des flux de trames vidéo et de trames audio fait l'objet d'une synchronisation indépendante. Dit autrement, les horloges 22 et 32 sont en principe diasynchrones.

Eventuellement, le gestionnaire général 41 peut retarder l'initialisation précitée tant que les heures respectivement indiquées par les deux horloges 22 et 32 ne présentent pas, un écart inférieur à un seuil déterminé. Une telle condition supplémentaire permet de garantir que le flux de trames audio ne subit pas en lui-même d'altération importante due à des synchronisations trop fréquentes avec le flux de trames vidéo.

De même, le gestionnaire général 41 ne commande l'initialisation précitée que si les facteurs de vitesse de lecture de chacune des horloges 22 et 32 sont égaux. Les facteurs peuvent ne pas être égaux, de manière transitoire, juste après la réception d'une commande de modification de la vitesse de lecture du programme, car cette commande n'affecte pas chacun des flux de trames vidéo et audio avec la même rapidité.

A partir de cette initialisation de l'horloge 32 avec l'heure indiquée par l'horloge 22, les deux horloges 22 et 32 sont mutuellement synchronisées par le gestionnaire général 41 et délivrent une heure commune. Dit autrement, t(IPCR1)=t(IPCR2). Plus particulièrement, dans l'exemple décrit ci-dessus, l'horloge 32 reproduit à chaque instant l'heure délivrée par l'horloge 22. On poursuit alors la délivrance des trames vidéo conformément au procédé décrit ci-dessus en référence au diagramme de la figure 2. Selon ce procédé, l'horloge 22 peut être initialisée en fonction des PTS du flux de trames vidéo. La synchronisation des trames vidéo ainsi obtenue ne provoque que des altérations réduites du flux de trames vidéo.

La délivrance des trames audio par le gestionnaire de flux 34 est aussi poursuivie, mais de façon asservie à l'horloge 22 associée aux trames vidéo. Le procédé de synchronisation utilisé pour les signaux audio correspond au procédé décrit en référence à la figure 2, dans lequel l'étape 106 de comparaison de la valeur absolue de la moyenne M avec un seuil de moyenne est supprimée, ainsi que l'étape 107. L'étape 105, lorsque le test de variance est positif, conduit alors systématiquement à l'étape 108.

La délivrance des signaux audio ainsi obtenue suit les initialisations de l'horloge 22 provoquées par la synchronisation de la présentation des trames vidéo. Le flux de trames audio est ainsi synchronisé par rapport au flux de trames vidéo. Cette synchronisation ne procède que par sauts de trames audio ou par introduction de délais d'attente dans le flux de trames audio. Il en résulte notamment que le flux de trames audio à débit régulé délivré à l'amplificateur 36 peut présenter des altérations plus importantes que le flux de trames vidéo délivré au dispositif d'affichage 26. C'est pourquoi, la synchronisation mutuelle des deux flux est effectuée avec une priorité accordée au flux de trames vidéo. Un tel fonctionnement est approprié lorsqu'on considère qu'un utilisateur possède une perception des irrégularités du flux audio inférieure à celle associée au flux vidéo.

Dans une autre mise en oeuvre du procédé de synchronisation mutuelle des flux de trames vidéo et audio, la priorité peut être accordée au flux de trames audio. Dans ce cas, l'horloge 22 reproduit l'heure indiquée par l'horloge 32.

Eventuellement, la priorité peut être attribuée à l'un ou à l'autre des deux flux en fonction de circonstances déterminées ou en fonction d'une commande correspondante entrée par l'utilisateur. La priorité peut alors être attribuée par le gestionnaire général 41.

On peut prévoir que le procédé de synchronisation mutuelle décrit ci-dessus soit réversible. Si les deux horloges 22 et 23 sont verrouillées, le gestionnaire principal 41 peut alors les déverrouiller lorsque l'un des gestionnaires de flux 24 ou 34 (qui continuent de fonctionner indépendamment l'un de l'autre malgré le verrouillage de l'une des horloges 22 ou 32 imposé par le gestionnaire principal 41) requiert une initialisation de l'horloge respectivement 22 ou 32 en raison d'un écart supérieur audit seuil déterminé. En effet, un tel écart signifie qu'il y a un décalage important entre les deux horloges 22 et 32, qui nécessite de les dissocier. Ceci peut se produire lorsqu'une discontinuité du flux de trames vidéo ou du flux de trames audio se produit sans contrepartie immédiate sur l'autre flux (par exemple lors d'un changement de la vitesse et/ou du sens de lecture, ou d'un changement de l'origine des trames).

Lorsque le programme est lu à vitesse élevée, que les régulateurs 20 et 30 ne peuvent traiter avec précision, les mesures suivantes permettent de conserver au mieux la synchronisation mutuelle entre les horloges 22 et 32.

Le régulateur 20 (vidéo) peut émettre une commande au décodeur 25 pour sauter des portions de données dans le flux de données compressées. En retour, le décodeur l'informe de l'existence d'une discontinuité. Dans ce cas, au lieu de chercher à conserver la synchronisation, il réinitialise immédiatement l'horloge 22. Lorsque les deux horloges sont verrouillées, l'audio est ainsi immédiatement informée de la nouvelle référence.

Le régulateur 30 (audio) applique le même processus de façon réciproque. De plus, si l'audio vient à être très en retard par rapport à la vidéo, le régulateur 30 peut aussi émettre une commande au décodeur 35 pour sauter une portion du flux de données audio, ou bien de sauter les trames audio une par une. Dans ce cas, la taille en octets du saut requis est déterminée en multipliant le nombre de trames audio à sauter par le débit binaire du flux de données audio. Le nombre de trames à sauter est déterminé en fonction de l'écart entre la PTS courante et la PTR courante.

## Revendications

1. Procédé de synchronisation de la présentation de trames vidéo ou de trames audio générées en traitant un flux de données comportant des estampilles temporelles (PTS) indiquant des instants de présentation desdites trames, le traitement de certaines au moins des estampilles temporelles (PTS) comprenant les étapes suivant lesquelles :
- on calcule une valeur d'écart courante entre l'instant (t(PTS)) de présentation indiqué par une estampille temporelle en cours de traitement et une heure (t(IPCR)) indiquée par une horloge de référence locale (2) lors du traitement de ladite estampille temporelle ;
- on mémorise (102) ladite valeur d'écart courante dans un registre (3) à la suite de valeurs d'écart correspondant à des estampilles temporelles traitées antérieurement ;
- on calcule (104) une variance (V) d'un ensemble ordonné de valeurs d'écart stockées dans le registre venant après une valeur d'écart de référence, ledit ensemble de valeurs d'écart comprenant au moins la valeur d'écart courante, et on compare ladite variance à un seuil de variance déterminé,
- si la variance est supérieure au seuil de variance (V_{S}), on sélectionne la valeur d'écart courante en tant que nouvelle valeur d'écart de référence, ou
- si la variance est inférieure au seuil de variance (V_{S}), on calcule une moyenne (M) des valeurs d'écart dudit ensemble de valeurs d'écart et compare (106) ladite moyenne à un seuil de moyenne déterminé (M_{S}),
- si la valeur absolue de la moyenne est supérieure au seuil de moyenne, on initialise l'horloge de référence locale à une valeur instantanée correspondant à l'instant de présentation indiqué par l'estampille temporelle en cours de traitement (107) et on sélectionne la valeur d'écart courante en tant que nouvelle valeur d'écart de référence, ou
- si la valeur absolue de la moyenne est inférieure au seuil de moyenne, on ajuste la présentation des trames de façon à réduire l'écart entre l'instant de présentation indiqué par l'estampille temporelle en cours de traitement et ladite heure indiquée par l'horloge de référence locale lors du traitement de ladite estampille temporelle.

2. Procédé selon la revendication 1, suivant lequel l'ajustement de la présentation des trames comprend, lorsque la moyenne des valeurs d'écart de l'ensemble des valeurs d'écart est négative, le saut d'au moins une trame (109).

3. Procédé selon la revendication 1 ou la revendication 2, suivant lequel l'ajustement de la présentation des trames comprend, lorsque la moyenne des écarts de l'ensemble d'écarts est positive, l'introduction d'une temporisation dans la présentation des trames (110).

4. Procédé selon l'une quelconque des revendications précédentes, suivant lequel on ne mémorise dans le registre la valeur d'écart courante que si ladite valeur d'écart est non nulle, et suivant lequel on sélectionne la valeur d'écart précédemment mémorisée dans le registre si la dite valeur d'écart est nulle.

5. Procédé selon l'une quelconque des revendications précédentes, suivant lequel, lorsqu'on sélectionne une nouvelle valeur d'écart de référence, on efface toutes les valeurs d'écart contenues dans le registre, et suivant lequel l'ensemble des valeurs d'écart prises en compte pour le calcul de variance et pour le calcul de moyenne correspond à toutes les valeurs d'écart stockées dans le registre au moment du calcul.

6. Procédé selon la revendication 5, dans lequel, après la mémorisation dans le registre de la valeur d'écart courante, le traitement de l'estampille temporelle est interrompu (103,111) si le registre contient un nombre de valeurs d'écart inférieur à un nombre déterminé.

7. Procédé selon l'une quelconque des revendications précédentes, comprenant en outre, en réponse à une commande de début de présentation et avant le début du traitement des estampilles temporelles, une initialisation de l'horloge de référence locale à une valeur instantanée correspondant à l'instant de présentation indiqué par la première estampille temporelle à traiter.

8. Procédé selon la revendication 7, comprenant à partir de la réception de la commande de début de présentation un enregistrement dans une mémoire tampon (5) des trames reçues.

9. Procédé selon l'une quelconque des revendications précédentes, suivant lequel le flux de données est lu sur un support numérique d'enregistrement de masse (11 a).

10. Procédé selon l'une quelconque des revendications 1 à 8, suivant lequel le flux de données est reçu en temps réel d'une source de diffusion en temps réel (12a).

11. Procédé selon la revendication 10, suivant lequel le cadencement de l'horloge locale de référence est synchronisé avec des références temporelles (PCR) contenues dans le flux de données reçu.

12. Procédé de synchronisation de la présentation de trames vidéo et de la présentation de trames audio pour la présentation en parallèle des trames vidéo et des trames audio, comprenant les étapes suivant lesquelles :
- on synchronise la présentation des trames vidéo selon un procédé selon l'une quelconque des revendications 1 à 11;
- parallèlement, on synchronise la présentation des trames audio selon un procédé selon l'une quelconque des revendications 1 à 11;
- on synchronise mutuellement une horloge de référence locale (22) associée à la présentation des trames vidéo et une horloge de référence locale (32) associée à la présentation des trames audio, en verrouillant une première de ces horloges de référence locale à l'autre.

13. Procédé selon la revendication 12, suivant lequel le verrouillage est obtenu en initialisant à chaque fois ladite première horloge de référence locale à la valeur instantanée de l'autre horloge de référence locale.

14. Procédé selon l'une quelconque des revendications 12 ou 13, suivant lequel on initialise ladite première horloge de référence locale à la valeur instantanée de l'autre horloge de référence locale uniquement si les heures indiquées par chacune des deux horloges de référence locale respectives présentent, à un instant donné, un écart inférieur à un seuil déterminé.

15. Dispositif comprenant des moyens pour la mise en oeuvre d'un procédé selon l'une quelconque des revendications 1 à 14.

16. Circuit pilote vidéo comprenant un dispositif selon la revendication 15.

17. Boîtier décodeur comprenant un circuit selon la revendication 16.

## Claims

1. Process for synchronizing the presentation of video frames or of audio frames generated by processing a data stream comprising time stamps (PTS) indicating instants of presentation of said frames, the processing of certain at least of the time stamps (PTS) comprising the steps according to which:
- one calculates a current value of deviation between the presentation instant (t(PTS)) indicated by a time stamp undergoing processing and a time (t(IPCR)) indicated by a local reference clock (2) during the processing of said time stamp;
- said current value of deviation is stored (102) in a register (3) following values of deviation corresponding to previously processed time stamps;
- one calculates (104) a variance (V) of an ordered set of deviation values stored in the register coming after a reference deviation value, said set of deviation values comprising at least the current value of deviation, and said variance is compared with a determined variance threshold,
- if the variance is greater than the variance threshold (V_{S}), the current value of deviation is selected as new value of reference deviation, or
- if the variance is less than the variance threshold (V_{S}), an average (M) of the deviation values of said set of deviation values is calculated and said average is compared (106) with a determined average threshold (M_{S}),
- if the absolute value of the average is greater than the average threshold, the local reference clock is initialized to an instantaneous value corresponding to the presentation instant indicated by the time stamp undergoing processing (107) and the current value of deviation is selected as new value of reference deviation, or
- if the absolute value of the average is less than the average threshold, the presentation of the frames is adjusted in such a way as to reduce the deviation between the presentation instant indicated by the time stamp undergoing processing and said time indicated by the local reference clock during the processing of said time stamp.

2. Process according to Claim 1, according to which the adjustment of the presentation of the frames comprises, when the average of the deviation values of the set of deviation values is negative, the skipping of at least one frame (109).

3. Process according to Claim 1 or Claim 2, according to which the adjustment of the presentation of the frames comprises, when the average of the deviations of the set of deviations is positive, the introduction of a timeout into the presentation of the frames (110).

4. Process according to any one of the preceding claims, according to which the current value of deviation is stored in the register only if said value of deviation is non-zero, and according to which the deviation value previously stored in the register is selected if said deviation value is zero.

5. Process according to any one of the preceding claims, according to which, when a new value of reference deviation is selected, all the deviation values contained in the register are erased, and according to which the set of deviation values taken into account for the variance calculation and for the average calculation corresponds to all the deviation values stored in the register at the moment of the calculation.

6. Process according to Claim 5, wherein, after the storing in the register of the current value of deviation, the processing of the time stamp is interrupted (103, 111) if the register contains a number of values of deviation less than a determined number.

7. Process according to any one of the preceding claims, furthermore comprising, in response to a command of presentation start and before the start of the processing of the time stamps, an initialization of the local reference clock to an instantaneous value corresponding to the presentation instant indicated by the first time stamp to be processed.

8. Process according to Claim 7, comprising commencing from the receipt of the command of presentation start a recording in a buffer memory (5) of the frames received.

9. Process according to any one of the preceding claims, according to which the data stream is read on a mass recording digital medium (11a).

10. Process according to any one of Claims 1 to 8, according to which the data stream is received in real time from a real-time broadcasting source (12a).

11. Process according to Claim 10, according to which the tick rate of the local reference clock is synchronized with time references (PCR) contained in the data stream received.

12. Process for synchronizing the presentation of video frames and the presentation of audio frames for the presentation in parallel of the video frames and of the audio frames, comprising the steps according to which:
- the presentation of the video frames is synchronized according to a process according to any one of Claims 1 to 11;
- parallel therewith, the presentation of the audio frames is synchronized according to a process according to any one of Claims 1 to 11;
- a local reference clock (22) associated with the presentation of the video frames and a local reference clock (32) associated with the presentation of the audio frames are mutually synchronized by locking a first of these local reference clocks to the other.

13. Process according to Claim 12, according to which the locking is obtained by on each occasion initializing said first local reference clock to the instantaneous value of the other local reference clock.

14. Process according to either of Claims 12 and 13, according to which said local reference clock is initialized to the instantaneous value of the other local reference clock only if the times indicated by each of the two respective local reference clocks exhibit, at a given instant, a deviation less than a determined threshold.

15. Device comprising means for the implementation of a process according to any one of Claims 1 to 14.

16. Video driver circuit comprising a device according to Claim 15.

17. Decoder box comprising a circuit according to Claim 16.

## Patentansprüche

1. Verfahren zur Synchronisierung der Wiedergabe von Videoframes oder Audioframes, welche erzeugt werden durch Verarbeiten eines Zeitmarkierungen (PTS) umfassenden Datenflusses, wobei die Zeitmarkierungen die Wiedergabezeitpunkte der Frames angeben, wobei die Verabeitung wenigstens bestimmter Zeitmarkierungen (PTS) die nachfolgenden Schritte umfasst:
- Berechnen eines laufenden Abweichungswerts zwischen dem Wiedergabezeitpunkt (t(PTS)), der während der Verarbeitung durch eine Zeitmarkierung angegeben wird, und einer Zeit (t(PCR)), welche durch eine lokale Referenzuhr (2) bei der Verarbeitung der Zeitmarkierung angegeben wird;
- Speichern (102) des laufenden Abweichungswerts in einem Speicher (3) nach Abweichungswerten, welche zuvor verarbeiteten Zeitmarkierungen entsprechen;
- Berechnen (104) einer Varianz (V) einer geordneten Gruppe von im Speicher gespeicherten Abweichungswerten, welche nach einem Referenzabweichungswert kommt, wobei die Gruppe von Abweichungswerten wenigstens den laufenden Abweichungswert umfasst, und Vergleichen der Varianz mit einem vorbestimmten Varianzschwellwert,
- wenn die Varianz größer ist als der Varianzschwellwert (V_{S}), Auswählen des laufenden Abweichungswerts als neuer Referenzabweichungswert, oder
- wenn die Varianz kleiner ist als der Varianzschwellwert (V_{S}), Berechnen eines Mittelwerts (M) der Abweichungswerte der Gruppe von Abweichungswerten und Vergleichen (106) des Mittelwerts mit einem vorbestimmten Mittelwertschwellwert (M_{S}),
- wenn der Absolutwert des Mittelwerts größer als der Mittelwertschwellwert ist, Initialisieren der lokalen Referenzuhr auf einen momentanen Wert, welcher dem Wiedergabezeitpunkt entspricht, der durch die Zeitmarkierung während der Verarbeitung (107) angegeben wird, und Auswählen des laufenden Abweichungswerts als neuen Referenzabweichungswert, oder
- wenn der Absolutwert des Mittelwerts kleiner als der Mittelwertschwellwert ist, Anpassen der Wiedergabe der Frames derart, dass die Abweichung zwischen dem Wiedergabezeitpunkt, der durch die Zeitmarkierung während der Verarbeitung angegeben wird, und der Zeit, welche durch die lokale Referenzuhr bei der Verabeitung der Zeitmarkierung angegeben wird, verringert wird.

2. Verfahren nach Anspruch 1, bei dem die Anpassung der Wiedergabe der Frames das Überspringen wenigstens eines Frames (109) umfasst, sofern der Mittelwert der Abweichungswerte der Gruppe von Abweichungswerten negativ ist.

3. Verfahren nach Anspruch 1 oder Anspruch 2, bei dem die Anpassung der Wiedergabe der Frames die Einführung einer Verzögerung umfasst, sofern der Mittelwert der Abweichungswerte der Gruppe von Abweichungswerten positiv ist.

4. Verfahren nach einem der vorhergehenden Ansprüche, bei dem der laufende Abweichungswert nur im Speicher gespeichert wird, wenn der Abweichungswert nicht Null ist, und bei dem der zuvor im Speicher gespeicherte Abweichungswert ausgewählt wird, wenn der Abweichungswert Null ist.

5. Verfahren nach einem der vorhergehenden Ansprüche, bei dem alle im Speicher enthaltenen Abweichungswerte gelöscht werden, wenn ein neuer Referenzabweichungswert ausgewählt wird, und bei dem die Gruppe von im Speicher enthaltenen Abweichungswerten, welche für die Varianzberechnung und die Mittelwertberechnung berücksichtigt werden, allen Abweichungswerten entspricht, welche zum Zeitpunkt der Berechnung im Speicher gespeichert sind.

6. Verfahen nach Anspruch 5, bei dem nach der Speicherung des laufenden Abweichungswerts im Speicher die Verarbeitung der Zeitmarkierung unterbrochen wird (103, 111), wenn der Speicher eine Anzahl von Abweichungswerten enthält, die kleiner ist als eine vorbestimmte Anzahl.

7. Verfahren nach einem der vorhergehenden Ansprüche, ferner umfassend in Reaktion auf einen Befehl des Wiedergabebeginns und vor dem Beginn der Verarbeitung der Zeitmarkierungen, eine Initialisierung der lokalen Referenzuhr auf einen momentanen Wert, welcher dem Wiedergabezeitpunkt entpricht, der durch die erste zu verarbeitende Zeitmarkierung angegeben wird.

8. Verfahren nach Anspruch 7, umfassend ausgehend vom Empfang des Befehls des Wiedergabebeginns ein Speichern von empfangenen Frames in einem Pufferspeicher (5).

9. Verfahren nach einem der vorhergehenden Ansprüche, bei dem der Datenfluss auf einem digitalen Massenspeicherträger (11a) gelesen wird.

10. Verfahren nach einem der Ansprüche 1 bis 8, bei dem der Datenfluss in Echtzeit von einer Echtzeitsendequelle (12a) empfangen wird.

11. Verfahren nach Anspruch 10, bei dem die Taktung der lokalen Referenzuhr mit Zeitreferenzen (PCR) synchronisiert wird, welche im empfangenen Datenfluss enthalten sind.

12. Verfahren zur Synchronisierung der Wiedergabe von Videoframes und der Wiedergabe von Audioframes für die parallele Wiedergabe von Videoframes und Audioframes, umfassend die folgenden Schritte:
- Synchronisieren der Wiedergabe von Videoframes gemäß dem Verfahren nach einem der Ansprüche 1 bis 11;
- parallel dazu Synchronisieren der Wiedergabe von Audioframes gemäß dem Verfahren nach einem der Ansprüche 1 bis 11;
- Wechselseitges Synchronisieren einer lokalen Referenzuhr (22), welche der Wiedergabe von Videoframes zugeordnet ist, und einer lokalen Referenzuhr (32), welche der Wiedergabe von Audioframes zugeordnet ist, durch Verriegeln einer ersten dieser lokalen Referenzuhren mit der anderen.

13. Verfahren nach Anspruch 12, bei dem die Verriegelung erreicht wird indem jedes Mal die erste lokale Referenzuhr auf den momentanen Wert der anderen lokalen Referenzuhr initialisiert wird.

14. Verfahren nach einem der Ansprüche 12 oder 13, bei dem die erste lokale Referenzuhr auf den momentanen Wert der anderen lokalen Referenzuhr nur dann initialisiert wird, wenn die durch die beiden lokalen Referenzuhren angegebenen jeweiligen Zeiten zu einem bestimmten Zeitpunkt eine Abweichung aufweisen, die kleiner ist als ein vorbestimmter Schwellwert.

15. Vorrichtung, umfassend die Mittel zur Umsetzung eines Verfahrens nach einem der Ansprüche 1 bis 14.

16. Videopilotschaltung, umfassend eine Vorrichtung nach Anspruch 15.

17. Decodierbox, umfassend eine Schaltung nach Anspruch 16.
